# EUROPEAN PATENT SPECIFICATION

(11) **EP 2 372 211 B1**
(45) Date of publication and mention of the grant of the patent: **03.06.2015**
(21) Application number: 10004361.1
(22) Date of filing: 23.04.2010
(51) Int. Cl.: F16L 19/10, F16L 19/12, F16L 23/028, F16L 15/00, F16L 19/02, F16L 19/025, F16L 19/028

(54) **Thin-walled pipe joint and method to couple a first pipe to a second pipe**
Dünnwandige Rohrverbindung und Verfahren zum Verbinden eines ersten Rohres mit einem zweiten Rohr
Raccord de tuyau à paroi mince et méthode pour coupler un premier tuyau à un second tuyau

(30) Priority: 26.03.2010 EP 10003260
(43) Date of publication of application: 05.10.2011
(73) Proprietor: Tenaris Connections Ltd., Kingstown (VC)
(72) Inventor: Carcagno, Gabriel, 2804 Campana (AR); Quiroga, Alfredo, 2804 Campana (AR); Mazzaferro, Gaston, 2804 Campana (AR)
(74) Representative: Grünecker Patent- und Rechtsanwälte PartG mbB

(56) References cited:
- EP-A1- 0 309 179
- EP-A2- 1 065 423
- WO-A1-98/10212
- WO-A2-2007/002576
- US-A- 1 799 762
- US-A- 3 362 731
- US-A- 3 889 989

## Description

The invention concerns a pipe joint for connecting a first pipe to a second pipe, comprising a hollow pin member on the side of the first pipe, comprising a hollow box member which is at least partially surrounding the pin member and which is connected to the second pipe, wherein a first ring is placed near and end of said pin member in direct contact with the pin member and a second ring is engaged with the box member, and wherein the second ring abuts axially against the first ring.

The invention is especially focusing on coupling of pipes such as thin walled tubes.

To connect two pipes with each other is a very common objective and solved in the prior art by diverse devices. The International patent application WO 2007/002576 A2 discloses e.g. fittings which are provided for use with different types of tubing. One such fitting of WO 2007/002576 A2 includes a gripping member having a sharp tube indenting edge that provides a seal between the tube gripping member and the tube. Another such fitting of WO 2007/002576 A2 includes a tube gripping member having a body indenting edge that provides a seal between the tube gripping member and a fitting body. However, such prior art is not capable of being used in the oil and gas industry. The standards which apply for the oil and gas industry concerning the connection of pipes with each other, require a reusability of all single elements. This requirement is not fulfilled in the prior art disclosed in WO 2007/002576 A2, as a plastic deformation, such as an indentation, is to be experienced in one of the tubes.

Other prior art devices are disclosed in US 4,844,517, EP 0309179 A1 and EP 1065423 A2. In US 4,844,517 a nut member contacts a coupling union via mating threads, whereas the coupling union is connected to a tube via recesses and protrusions of the tube which are positioned in the grooves of the coupling union. During tightening, the nut member forces the coupling union to contact a sleeve member, which is attached to another tube via grooves and protrusions. However, this prior art device has a drawback of being difficult to mount.

In the solutions disclosed in EP 0309179 A1 and EP 1065423 A2, a plastic deformation, as in WO 2007/002576 A2, is needed for achieving the sealing effect, which is not desirable.

Another pipe coupling is disclosed in US 3,889,989 focusing on high pressure pipe couplings of the kind in which one end of a bored coupling body is externally threaded to receive a rigid nut, wherein said body and said nut each having an internal tapering surface which is in contact with an asymmetrical bi-conical rigid bite-ring made of ductile metal which is compressed by means of ridges into circular grooves formed on the end of a pipe to be coupled, and in which the bite-ring has between its tapering sections a central section that has a larger diameter than that of said tapering sections. In accordance with the invention, the central section of the bite-ring incorporates a circumferential sealing lip which is arranged to bear against an end face of the coupling body. WO 98/10212 A1 discloses a pipe joint according to the preamble of claim 1.

This pipe coupling needs movement of the nut in relation to the coupling body. However, again, plastic deformation, this time of the bite-ring, is necessary to achieve a fluid tight sealing between the respective elements.

It is the objective of the current invention to correct the disadvantages of the prior art to make an easy application for the oil and gas industry possible. At the same time, a device shall be presented which is easy to manufacture, safe to use in the field, with less fluid leakage resulting between the respective parts of a joint. As explained above, reusability of the single elements even after the pipe joint has been assembled for a first time, shall be assured at the same time.

The invention concerns also a method to fluid tightly couple a first pipe to a second pipe.

As regards to the documents of the prior art discussed above, methods to fluid tightly couple a first pipe to a second pipe are in general already known, but have diverse drawbacks concerning fluid tightness and reusability, summing up to not fulfilling the necessary standards, relevant in the oil and gas industry.

It is the object of the current invention to overcome these drawbacks as well. It is further the object to make the assembly easier.

The object of the current invention is solved with a pipe joint of the above-mentioned type according to the characterization portion of claim 1.

The object is also solved by
a) a method to fluid tightly couple a first pipe to a second pipe, comprising the steps of: inserting a first ring into a box member, which is connected to the second pipe, inserting a second ring into the box member and inserting a pin member into the first ring, wherein the second ring is generally extending from the first ring in the direction opposite to an end of the pin member which is next to the box member, wherein said first ring axially abuts again said box member and wherein the first ring is connected to the pin member via a threaded connection.
   and is alternatively solved by
b) a method to fluid tightly couple a first pipe to a second pipe, comprising the steps of: imposing a second ring over a pin member, positioning a first ring on the outside of the pin member, inserting the combination of the pin member, the first ring and the second ring at least partially into a box member, inserting the second ring with its outer threads into the box member, wherein the second ring is generally extending from the first ring in the direction opposite to an end of the pin member which is next to the box member.

Due to this invention, thin walled pipes can be connected with each other. The pin member itself can also be thin-walled and can be connected to this first pipe directly or indirectly. As the first ring can be screwed onto the second threads of the pin member at the production facility such as a mill, it can be avoided that at the field, where the oil or gas rig is finalized, the operators in the field will have to handle the threaded connection between the pin member and the first ring. Problems, such as cross threading or overwinding can be thus, avoided. Thus results therein that the operator of the rig at the piping location, i.e. the field, will only have to deal with screw of the second ring to the box member. As by the fact that the second ring is having an outer surface which is spaced apart from the outer surface of the pin member, consequently the second ring does not necessarily have to be thin-walled. A more robust thread can be used between the second ring and the box member in consequence thereby avoiding problems, such as cross-threading or overwinding during the screwing operation.

Embodiments which are enabling special advantages are claimed in the dependant claims and explained in the following.

It is for instance of advantage, if the second ring is releasably engaged with the box member.

According to the invention, the first ring is connected to the pin member via a threaded connection.

It is further of advantage, if the box member is comprising first threads on its inside, which are in contact with outer threads of the second ring, wherein the second ring is positioned between the pin member and the box member, and wherein the first ring comprises inner threads, which are in mating contact with second threads on the outside of the pin member.

An especially advantageously configured embodiment is characterized in that the pin member comprises a locating surface aligned in a transverse direction relative to the longitudinal axis of the pin member which is in contact with the box member, wherein the locating surface is preferably orthogonally aligned, relative to the said longitudinal axis. By providing such a locating surface, a stop on the pin member can be provided to make the stopping of relative movement of the pin member in regards to the box member possible, as soon as the locating surface is in abutting contact with the box member.

Further, it is of advantage if the box member is directly and/or integrally connected to the second pipe. As such, the second pipe can already be configured at the mill to be appropriately shaped for attachment with the second ring, without providing a possibility for future leakage between the box member and the second pipe.

As in the mill where the pipe joint is manufactured, the handling of light threads, relative to heavy threads, can take place at a lower risk of damaging those light threads, it is of advantage, if the first threads are of different thread height and/or thread pitch and/or form the second threads. Though some elements are pre-combined at the mill, namely those elements with the light threads to make conveyance of oil or gas possible, the overall joint may only be finalized at the field. As an example for a light thread the standard API 8 round thread can be identified. However, also sawtooth threads and even threads with a non helical geometry, namely having consecutive circular protuberances that engage by actual make up instead of rotational make up, are examples of such light threads. Such a light thread is preferably positioned in the contact area between the pin member and the first ring, namely in the area of the second threads.

It is of advantage if the first and second threads are of the same thread type. As such, the manufacturing process can be simplified. The first threads on the inside of the box member and the outer threads of the second ring can be configured as a buttress-like thread. However, also different engaging means can be used such as gripping or clamping means.

It is especially advantageous if the first threads are of the sawtooth type. It has been experienced that those threads are relatively insusceptible to damage and can still convey high forces and loads.

If the first ring has a smaller outer diameter than the inner diameter of the box member, an axial gap between the box member and the first ring can be experienced, so that the manufacturing process can be simplified. The first threads of the box member do not come in contact with the first ring when the box member is imposed onto the pin member, the first ring and the second ring. To heighten the fluid tightness it is of advantage if a fluid tight seal is provided between the pin member and the box member, preferably in the vicinity of the locating surface of the pin member.

If the second threads are having a thread height hₜ₂ in their middle between about 20% and about 50% especially about 35% of a thread height hₜ₁ in the middle of the first threads, the thin wall of the pin member is not corrupted by the first threads, though those first threads can still convey sufficiently high forces and loads.

Special positive effects can be experienced if the fluid tight seal is configured as a resilient seal, such as an o-ring and/or configured as a metal-to-metal seal.

It is of advantage if the first ring is axially spaced apart from the box member.

In a variant which is of advantage, a pin shouldering nose of the pin member, such as a stop area, is in contact with an o-ring in a groove-like recess in the box member.

In another variant the o-ring has a bigger outer circumferential diameter than the inner diameter of the groove-like recess in the box member. Such, the o-ring can be easily introduced into the groove-like recess and does not fall apart during the manufacturing process.

If the first threads and the second threads and their mating counterparts on the first and second rings are of a tapering nature, the alignment of the respective threads with each other can be simplified so that damages to the threads can be minimized and costs during the manufacturing process can be lowered.

Standard components can be used if the pin member, the first ring, the second ring and the box member are having a generally angular cross section.

Special advantages can be recognized if during the screwing of the second ring only the second ring is moved relative to both the pin member and the box member, so that no relative movement between the pin member and box member can be experienced.

The manufacturing is simplified as the pin member and the box member, which are each respectively connected to the first pipe and second pipe, do not have to be rotated relative to each other. Only the second ring has to be screwed into the box member so that the second ring abuts the first ring and forces the box member onto the locating surface of the pin member in the area of the stop.

It is of advantage if the surface of threaded portions are covered by at least one protective and/or lubricant layer. Such, no additional oil or grease need to be inserted at a field site, when the relevant segments of the pipe joint are assembled.

The aforementioned shall also be explained together with a drawing:
In Figure 1 a first embodiment of the invention in cross section is displayed.
In Figure 2 a second embodiment of the invention in cross section is displayed
in Figure 3 a third embodiment of the invention is displayed in cross section,
in Figure 4A a fourth embodiment, not part of the invention, is displayed in cross section,
in Figure 4B a detail of the groves between the first ring and the pin member of the embodiment of Figure 4A,
in Figure 5 a fifth embodiment, not part of the invention, is displayed in cross section, and
in Figure 6 a sixth embodiment, not part of the invention, is displayed in a cross section.

All Figures are only of schematic nature and supposed to simplify the understanding of the invention. For the same elements the same reference signs are used.

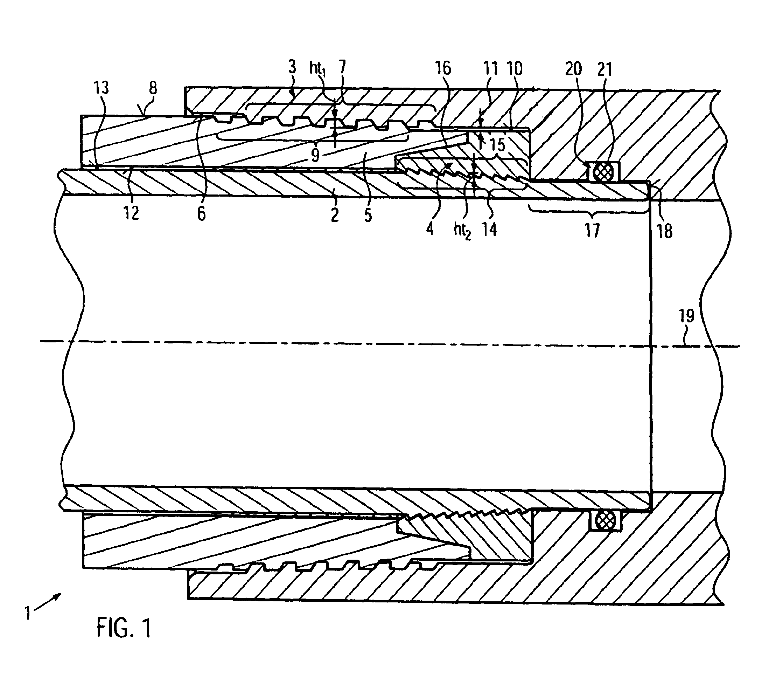

In Figure 1 a first embodiment of a pipe joint 1 according to the invention is displayed. Such pipe joints are used as joints, which are especially suitable in the oil and gas industry, e.g., in oil and gas rigs, pipelines and drill rods.

The pipe joint 1 is used to connect the first pipe to a second pipe. The first pipe is in direct connection or integrally connected to a hollow pin member 2. The hollow pin member has a relatively thin wall and an annular cross section. Outside of the pin member 2 a hollow box member 3 is arranged. Between the pin member 2 and the box member 3 a first ring 4 and a second ring 5 are arranged.

The box member 3 comprises on an inner surface 6 a first thread 7. The second ring 5 has on its outer surface 8 outer threads 9. The outer thread 9 and the first thread 7 are in contact with each other and mate with each other.

The box member 3, the first ring 4 and the second ring 5 all have a general annular cross section too.

Between the outer surface 10 of the first ring 4 and the inner surface 6 of the box member 3 an annular gap 11 exists. The inner surface 12 of the second ring 5 may be in contact with an outer surface 13 of the pin member 2 or may be spaced apart from the outer surface 13.

Second threads 14 are present on the outer surface of the pin member 2. Those second threads 14 are in contact with inner threads 15 of the first ring 4.

The first threads 7, the outer threads 9, the second threads 14 and the inner threads 15 are all tapering at their respective ends. The threads with the largest height are consequently always in the middle of the respective threads.

The first ring 4 and the second ring 5 touch each other along an engaging surface 16 of the first ring 4. This engaging surface 16 can have a transverse area. In the special embodiment of Figure 1 two orthogonal steps are connected via a beveled surface. It is not necessary that both steps and the beveled surface are contacted by the second ring 5. However, it is appreciated if the first ring 4 and the second ring 5 contact each other along at least a part of the engaging surface, so that force can be transmitted from the first ring 4 to the second ring 5 and vice versa.

The first ring 4 is in contact on one side with the box member 3. However, this contact is not necessary and a radial gap can exist at this position.

The second threads 14 and the inner threads 15 have a smaller height than the first threads 7 and the outer threads 9. In fact, the height hₜ₂ is about 20% ― 50%, preferably about 35% of the height hₜ₁ of the first threads 7.

In the embodiment of Figure 1 the first threads 7 and the outer threads 9 are sawtooth threads, whereas the second threads 14 and the inner threads 15 are metrical threads.

The pin member 2 comprises a stop area 17 with a locating surface 18. The locating surface 18 is ending in a plane, which is orthogally aligned in regards to a longitudinal axis 19 of the pipe joint 1.

The box member 3 has a groove-like recess 20 in which a compressible o-ring 21, establishing a fluid tight seal between the box member 3 and the pin member 2, is introduced.

Whereas the locating surface 18 stops the movement of the pin member 2 towards the box member 3, the o-ring 21 is compressed to improve the fluid tightness between the pin member 2 and the box member 3. The o-ring 21 has a bigger outer diameter than the respective diameter of the recess 20.

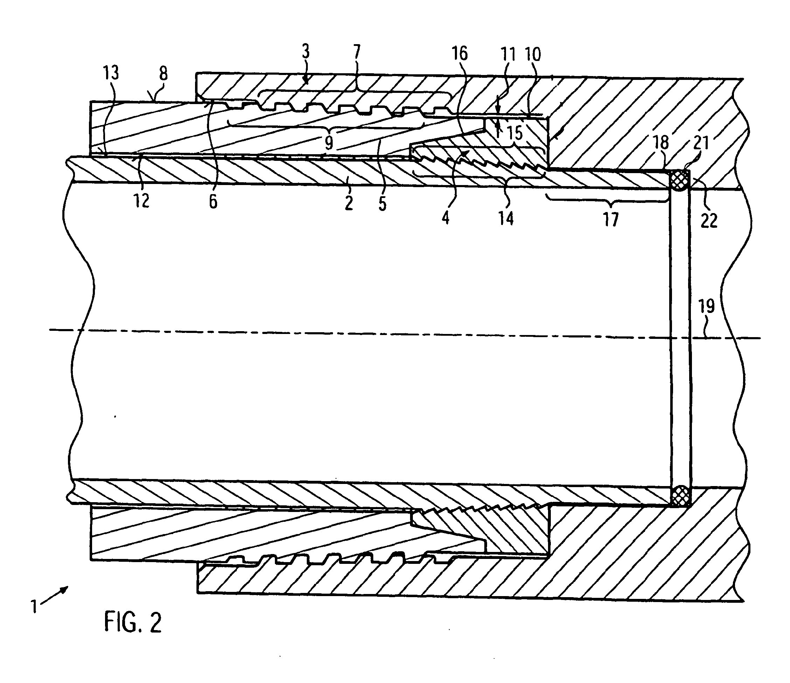

In Figure 2 another embodiment of the invention is disclosed, deviating from the embodiment of Figure 1 in the position of the o-ring 21. The o-ring 21 is in this second embodiment positioned between the locating surface 18 and a shoulder 22 of the box member 3.

Instead of an o-ring of elastic material a metal-to-metal sealing connection between the pin member 2 and the box member 3 can be established.

The pin member 2 may have in its stop area 17 a convex outer surface 13. Instead of a convex configuration of the surface, also a conical configuration is feasible.

The box member 3 may consequently also have a convex surface next to the stop area 17. Instead of such a convex surface also a conical surface may be present. In any case the abutting surfaces of the pin member 2 and the box member 3 are pressed against each other when assembled to provide a fluid tight seal.

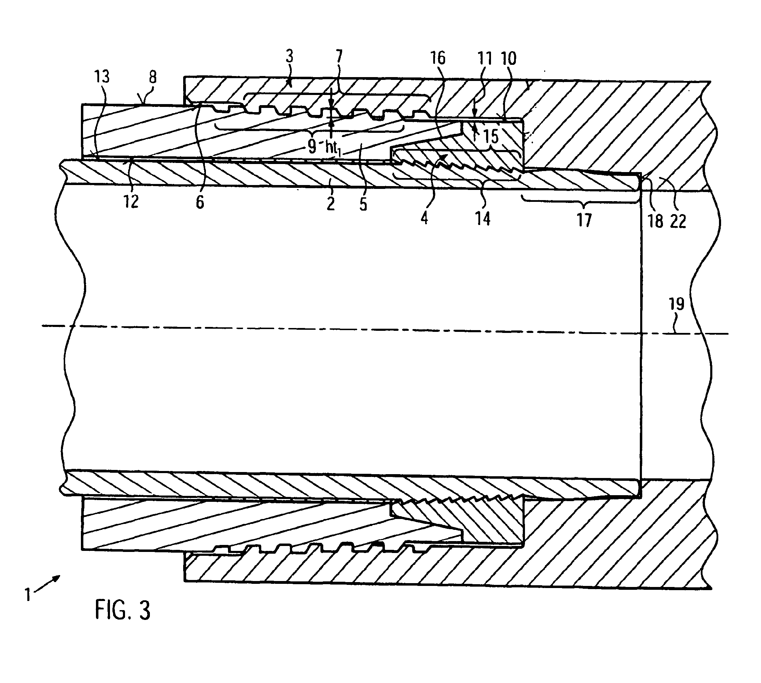

As is discernible in Figure 3, the locating surface 18 is in abutting alignment with the shoulder 22 of the box member 3.

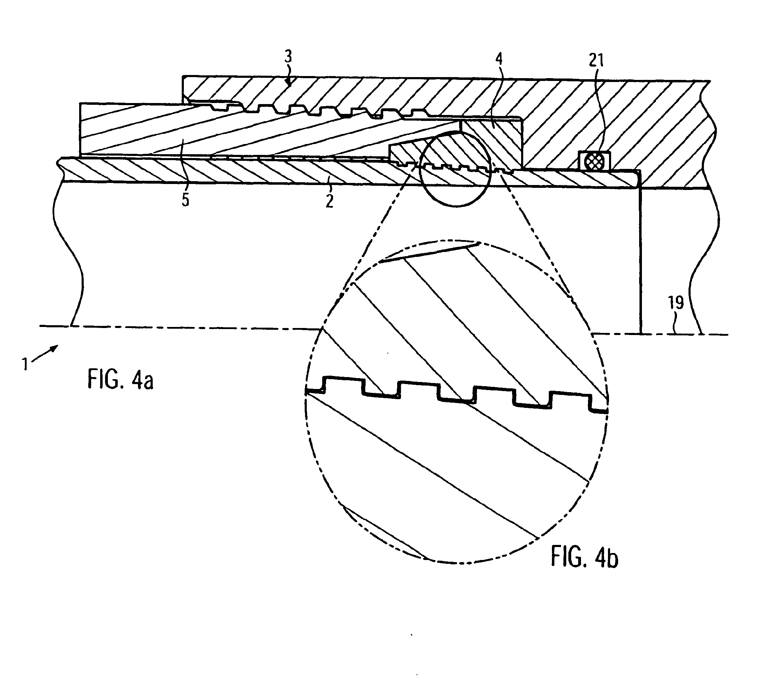

As is discernible in Figure 4A, one of the main differences of this embodiment, not part of the invention, compared to the embodiment of Figure 1, is that the first ring 4 is pushed onto the pin member 2. Alternatively, upsetting methods, such cold upsetting, or forging methods can be used to combine the first ring 4 with the pin member 2. Indeed, alternative connection methods, such as welding methods to achieve a welding seam between the first ring 4 and the pin member 2, are feasible. As a variant, an adhesive can be placed between the first ring 4 and the pin member 2.

It is not disclosed but possible, that circumferential grooves are incorporated either on the first ring 4 of the pin member 2 or both respective elements, so that a form fit can be achieved between those two elements. It is further possible that one or all of the grooves have a sawtooth configuration, as is discernible in Figure 4B.

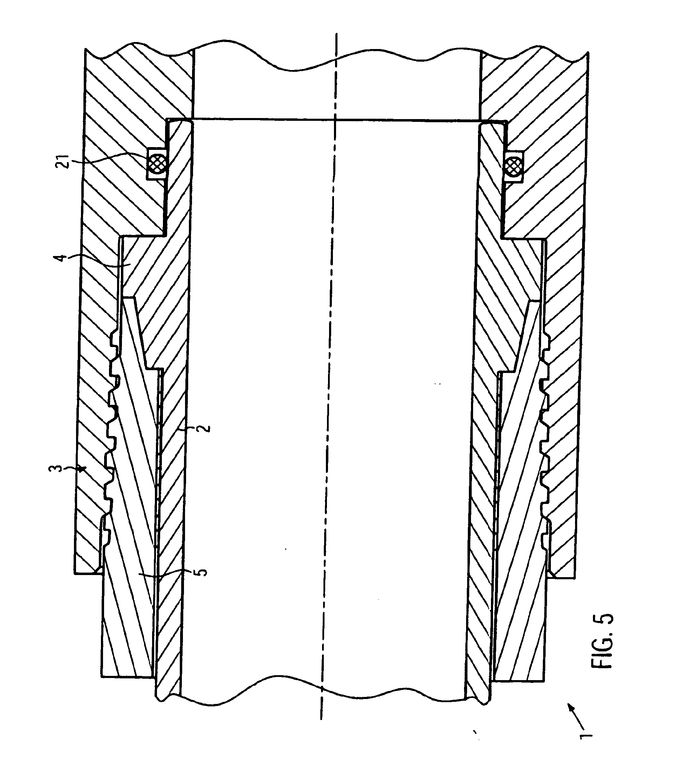

In Figure 5, in the therein disclosed fifth embodiment, not part of the invention, the first ring 4 is integrally connected to the pin member 2. Both elements comprises the same material.

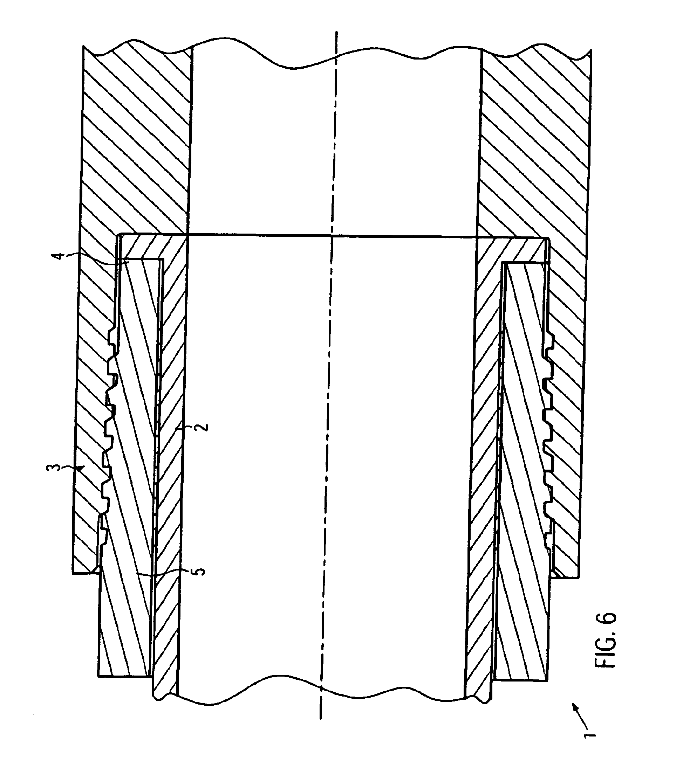

In the sixth embodiment, not part of the invention, of Figure 6, as in the fifth embodiment, the first ring 4 and the pin member 2 are of the same material and integrally connected to each other. However, contrary to the fifth embodiment in the sixth embodiment an O-ring is not utilized.

However, such a fluid-tight seal can be inserted at an appropriate position.

Further, the method for achieving a fluid tight seal between a first pipe and a second pipe will be explained below.

In a first step the second ring 5 is pushed over the pin member 2.

In a second step the first ring 4 is screwed onto the pin member 2.

In a third step the combination of the pin member 2, the first ring 4 and a second ring 5 is pushed into the box member 3.

In a final step the second ring 5 is screwed into the box member 3, whereby it abuts the engaging surface of the first ring 4. By this screwing movement of the second ring 5, the box member 3 is pushed against the pin member 2. Consequently a fluid tight seal between the box member 3 and the stop area 17 of the pin member 2 is achieved.

It is possible that all four elements, namely pin member 2, box member 3, first ring 4 and second ring 5 are reassembled even after a pipe joint has been tightly assembled and afterwards dismantled again.

Another method for achieving a fluid tight seal between a first pipe and a second pipe is characterized by four steps:

In a first step the first ring 4 is placed into the box member 3.

In a second step the second ring 5 is partially screwed onto the box member 3.

In a third step the pin member 2 is forced into the assembly, which has been configured in the previous two steps, wherein the first ring is connected to the pin member 2 in a threaded connection.

In a final step the second ring 5 is screwed into the box member 3 to its final position.

The invention is suitable for metal components so that the pin member 2, the box member 3, the first ring 4 and the second ring 5 are of metallic material, such as steel. Also, plastic material can be used instead for one or all components.

During use, this pipe joint experiences tension and internal pressure, in combination with bending. It is relevant to see the actual behaviour from the first pipe to the second pipe under said load conditions. Test conditions for such joints are, for example, defined by ISO 13670 standard, which can be complied with by numerical modeling that simulates combinations of tension and internal pressure. Such tests were applied to several samples of the pipe joints with a connection of the present invention. The samples all embodied the present invention and had variations in the geometrical conditions, for example, taper, interference, diameter of the pipes and their thickness, as well as steel grades.

As a result, the joint of the present invention, according to the FEA (finite element analysis) analysis carried out, has proven that sealability against internal pressure is maintained under the loading conditions tested.

The design of the joint was further verified by means of a full-scale testing program particularly developed to assess its performance. Based on the requirements of the ISO 13670, this testing program evaluated sealability and a repeated loading in combination with bending. The joint of the present invention successfully passed all stages of the testing program.

As an example, Table 1 shows a result of the sealability test (gas tightness) performed on pipes of 3-1/2 outside diameter 0.131 inches of wall thickness, under a bending of 20°/100ft.

**Table 1**

| load condition | tension [Kips] | internal pressure [psi] | gas-tightness of connection |
|---|---|---|---|
| tension only | 50 | 0 | OK |
| tension + internal pressure | 30 | 2600 | OK |
| internal pressure only | 0 | 3000 | OK |

1 psi = 6894.75 N/m²
1 Kip = 448.22 N
1 inch = 0,0254 m
1 foot = 0,3048 m

The joint 1 of the invention can be advantageously used also in association with dope-free surface treatments.

In particular, in order to improve the quality of the joint 1 a surface treatment can be carried out, a preferred choice being to coat the surface of the female threads 7 and 15 with Mn phosphate and leave a bare surface on the male threads 9 and 19. This treatment further improves galling resistance. Another improvement is achieved by using an API modified thread compound and an ecological thread compound together with Mn phosphate applied on a sand blasted surface.

In a first preferred dope-free surface treatment, which is disclosed in EP 1 554 518 B1, at least the surface of a threading has a surface roughness Ra comprised between 2,0 µm and 6,0 µm, said threading surface being covered by a first uniform layer of a dry corrosion inhibiting coating and said first layer being covered by a second uniform layer of dry lubricant coating.

The male threads 9 and 19 are provided with a protective layer on the surface of the thread. The female threads 7 and 15 can have a perfectly similar shape or it can be made without the protective layer and be connected to the male threads 9 and 19 provided with the protective layer. Said protective layer, in this first preferred variant, comprises:
- a first layer of dry corrosion inhibiting coating, which is comprised of an epoxy resin containing particles of Zn, deposited on the threading metal surface; advantageously these particles are made of 99% pure Zn and the thickness of the first layer has a value between 10 and 20 µm, preferably comprised between 10 and 15 µm;
- a second layer of dry lubricant coating, which is comprised of a mixture of MoS₂ and other solid lubricants in an inorganic binder and has a thickness between 10 and 20 µm, deposited over the surface of the dry corrosion inhibiting coating.

In a second preferred dope-free surface treatment which is also disclosed in EP 1 554 518 B1, at least the surface of the threading has a surface roughness Ra comprised between 2,0 µm and 6,0 µm, said threading surface being covered by a single uniform layer of a dry corrosion inhibiting coating containing a dispersion of particles of solid lubricant. The thickness of this single layer has a value comprised between 10 and 20 µm.

The male threads 9 and 19 are provided with said single uniform protective layer on the surface of the thread. The female threads 7 and 15 can have a perfectly similar shape or it can be made without the single uniform protective layer and be connected to the male threads 9 and 19 provided with said single protective layer.

In both cases, the layer of dry corrosion inhibiting coating containing the dispersion of particles of solid lubricant can be applied by spraying, brushing, dipping or any other method in which the coating thickness can be controlled.

Regarding said first and second preferred dope-free surface treatments, advantageously the relevant segments, such as the pipe members 2, are adapted to be assembled without the necessity of a further surface preparation prior to running in the field site or the addition of oil or grease; it is possible to transport and store relevant segments in the oilfield without risking that the segments lose their integrity because of corrosion on the threaded portions forming the connections; the connections can be assembled in the oilfield without removing the corrosion protection layer. Tests have given as result that there is no galling neither on unthreaded areas nor on thread and the connection had a very stable make up behaviour. The special arrangements of different surfaces and the surface treatment detailed in EP 1 554 518 B1 shall be seen as being included herein.

In a third preferred dope-free surface treatment which is also disclosed in WO 2007/063079 A1 the surface of the thread is provided with a coating comprising, in a first variant, a first layer with high friction and anti-seize properties laid on the overall surface of the pin and a second layer with low friction properties laid on specific parts of the overall surfaces of either one of pin or box, or comprising, in a second variant, a first layer laid on the overall surface of the box and a second layer laid on specific parts of the overall surfaces of either one of pin or box. The specific parts are those adapted to produce reciprocal radial contact, for example, crests in the female threads 7 and 15, roots in the male threads 9 and 19 and unthreaded areas.

The female threads 7 and 15 matching the male threads 9 and 19 can have a perfectly similar first layer and second layer on the surface or it can be made without the protective layers or still alternatively the layer can be made with a different structure or materials. It is also possible to have a coating only on the surface of the male threads 9 and 19 and no coating on the surface of the female threads 7 and 15.

As one of ordinary skill in the art would understand, other coatings may be applied either below or above the coating without departing from the scope of the present invention as in the appended claims. For example, a corrosion resistant layer can be applied over the coating, provided that the corrosion resistant layer does not affect the friction properties of the entire system. Additionally, the various coatings described herein may be applied to the overall surface of the male threads 9 and 19 or female threads 7 and 15, or only to selected areas. For example, the coatings may be applied to the threaded portions of the male threads 9 and 19 and the female threads 7 and 15, to unthreaded areas of the male threads 9 and 19 and the female threads 7 and 15, or to the shoulder portion of the pin member 2 and the box member 3 without departing from the scope of the present invention as in the appended claims.

In any case, all the above mentioned preferred dope-free surface treatments can be provided in combination with a minimum amount of dope.

## Claims

1. Pipe joint (1) for connecting a first pipe to a second pipe, comprising a hollow pin member (2) on the side of the first pipe, comprising a hollow box member (3), which is at least partially surrounding the pin member (2) and which is connected to a second pipe, wherein a first ring (4) is placed near an end of said pin member (2) and a second ring (5) is engaged with the box member (3), and wherein the second ring (5) abuts axially against the first ring (4), wherein the second ring (5) is generally extending from the first ring (4) in the direction opposite to said end of the pin member (2) which is next to the box member (3), and wherein the first ring (4) abuts axially against said box member (3), **characterized in that** the first ring (4) is connected to the pin member (2) via a threaded connection.

2. Pipe joint (1) according to claim 1, **characterized in that** the box member (3) is comprising first threads (7) on its inside, which are in contact with outer threads (9) of the second ring (5), the second ring (5) is positioned between the pin member (2) and the box member (3) and wherein the first ring (4) comprises inner threads (15) which are in mating contact with second threads (14) on the outside of the pin member (2).

3. Pipe joint (1) according to claim 2, **characterized in that** the pin member (2) comprises a locating surface (18) aligned in a transverse direction, relative to the longitudinal axis (19) of the pin member (2), wherein the locating surface (18) is in contact with the box member (3) and wherein the locating surface (18) is preferably orthogonally aligned, relative to the said longitudinal axis (19).

4. Pipe joint (1) according to claims 2 or 3, **characterized in that** the box member (3) is directly and/or integrally connected to the second pipe.

5. Pipe joint (1) according to one of the claims 2-4, **characterized in that** the first threads (7) are of different thread height and/or thread pitch and/or form than the second threads (14).

6. Pipe joint (1) according to one of the claims 2-5, **characterized in that** the first threads (7) and second threads (14) are of the same thread type.

7. Pipe joint (1) according to one of the claims 2-6, **characterized in that** the first threads (7) are of the sawtooth type.

8. Pipe joint (1) according to one of the foregoing claims, **characterized in that** the surface of the threaded portions is covered by at least one protective and/or lubricant layer.

9. Method to fluid tightly couple a first pipe to a second pipe, comprising the steps of: inserting a first ring (4) into a box member (3), which is connected to the second pipe, inserting a second ring (5) into the box member (3) and inserting a pin member into the first ring (4), wherein the second ring (5) is generally extending from the first ring (4) in the direction opposite to an end of the pin member (2) which is next to the box member (3), wherein said first ring (4) axially abuts against said box member (3), **characterized in that** the first ring (4) is connected to the pin member (2) via a threaded connection.

10. Method to fluid tightly couple a first pipe to a second pipe, comprising the steps of: imposing a second ring (5) over a pin member (2), positioning a first ring (4) on the outside of the pin member (2), inserting the combination of the pin member (2), the first ring (4) and the second ring (5) at least partially into a box member (3), inserting the second ring (5) with its outer threads (9) into the box member (3), wherein the second ring (5) is generally extending from the first ring (4) in the direction opposite to an end of the pin member (2) which is next to the box member (3), and wherein said first ring (4) axially abuts against said box member (3).

## Patentansprüche

1. Rohrverbindung (1) zum Verbinden eines ersten Rohrs mit einem zweiten Rohr, die ein hohles Stiftglied (2) auf der Seite des ersten Rohrs und ein hohles Büchsenglied (3), das das Stiftglied (2) wenigstens teilweise umgibt und mit dem zweiten Rohr verbunden ist, umfasst, wobei ein erster Ring (4) in der Nähe eines Endes des Stiftglieds (2) platziert ist und ein zweiter Ring (5) in das Büchsenglied (3) eingreift, wobei der zweite Ring (5) axial gegen den ersten Ring (4) anstößt, wobei sich der zweite Ring (5) allgemein von dem ersten Ring (4) in der Richtung erstreckt, die dem zu dem Büchsenglied (3) nahen Ende des Stiftglieds (2) entgegengesetzt ist, und wobei der erste Ring (4) axial gegen das Büchsenglied (3) anstößt, **dadurch gekennzeichnet, dass** der erste Ring (4) mit dem Stiftglied (2) über eine Schraubverbindung verbunden ist.

2. Rohrverbindung (1) nach Anspruch 1, **dadurch gekennzeichnet, dass** das Büchsenglied (3) an seiner Innenseite ein erstes Gewinde (7) umfasst, das in Kontakt mit einem Außengewinde (9) des zweiten Rings (5) ist, wobei der zweite Ring (5) zwischen dem Stiftglied (2) und dem Büchsenglied (3) angeordnet ist und wobei der erste Ring (4) ein Innengewinde (15) umfasst, das in einem eingreifenden Kontakt mit dem zweiten Gewinde (14) an der Außenseite des Stiftglieds (2) ist.

3. Rohrverbindung (1) nach Anspruch 2, **dadurch gekennzeichnet, dass** das Stiftglied (2) eine Positionierungsfläche (18) umfasst, die in einer Querrichtung relativ zu der Längsachse (19) des Stiftglieds (2) ausgerichtet ist, wobei die Positionierungsfläche (18) in Kontakt mit dem Büchsenglied (3) ist und wobei die Positionierungsfläche (18) vorzugsweise orthogonal relativ zu der Längsachse (19) ausgerichtet ist.

4. Rohrverbindung (1) nach Anspruch 2 oder 3, **dadurch gekennzeichnet, dass** das Büchsenglied (3) direkt und/oder indirekt mit dem zweiten Rohr verbunden ist.

5. Rohrverbindung (1) nach einem der Ansprüche 2 bis 4, **dadurch gekennzeichnet, dass** das erste Gewinde (7) eine andere Gewindehöhe und/oder Gewindesteigung und/oder Form aufweist als das zweite Gewinde (14).

6. Rohrverbindung (1) nach einem der Ansprüche 2-5, **dadurch gekennzeichnet, dass** das erste Gewinde (7) und das zweite Gewinde (14) vom gleichen Gewindetyp sind.

7. Rohrverbindung (1) nach einem der Ansprüche 2-6, **dadurch gekennzeichnet, dass** das erste Gewinde (7) vom Sägezahntyp ist.

8. Rohrverbindung (1) nach einem der vorstehenden Ansprüche, **dadurch gekennzeichnet, dass** die Fläche der Gewindeteile durch eine Schutz- und/oder Schmierschicht bedeckt ist.

9. Verfahren zum fluiddichten Koppeln eines ersten Rohrs mit einem zweiten Rohr, das die folgenden Schritte umfasst: Einstecken eines ersten Rings (4) in ein Büchsenglied (3), das mit dem zweiten Rohr verbunden ist, Einstecken eines zweiten Rings (5) in das Büchsenglied (3) und Einstecken eines Stiftglieds in den ersten Ring (4), wobei sich der zweite Ring (5) allgemein von dem ersten Ring (4) in der Richtung erstreckt, die einem dem Büchsenglied (3) nahen Ende des Stiftglieds (2) entgegengesetzt ist, wobei der erste Ring (4) axial gegen das Büchsenglied (3) anstößt, **dadurch gekennzeichnet, dass** der erste Ring (4) mit dem Stiftglied (2) über eine Schraubverbindung verbunden ist.

10. Verfahren zum fluiddichten Koppeln eines ersten Rohrs mit einem zweiten Rohr, das die folgenden Schritte umfasst: Stecken eines zweiten Rings (5) über ein Stiftglied (2), Positionieren eines ersten Rings (4) an der Außenseite des Stiftglieds (2), Einstecken der Kombination aus dem Stiftglied (2), dem ersten Ring (4) und dem zweiten Ring (5) wenigstens teilweise in ein Büchsenglied (3), Einstecken des zweiten Rings (5) mit seinem Außengewinde (9) in das Büchsenglied (3), wobei sich der zweite Ring (5) allgemein von dem ersten Ring (4) in der Richtung erstreckt, die einem dem Büchsenglied (3) nahen Ende des Stiftglieds (2) entgegengesetzt ist, und wobei der erste Ring (4) axial gegen das Büchsenglied (3) anstößt.

## Revendications

1. Raccord de tuyau (1) pour relier un premier tuyau à un second tuyau, comprenant un élément de broche creuse (2) sur le côté du premier tuyau, comprenant un élément de boîte creuse (3), qui entoure au moins partiellement l'élément de broche (2) et qui est relié à un second tuyau, dans lequel une première bague (4) est disposée près d'une extrémité dudit élément de broche (2) et une seconde bague (5) est en prise avec l'élément de boîte (3), et dans lequel la seconde bague (5) est axialement en butée contre la première bague (4), dans lequel la seconde bague (5) s'étend globalement depuis la première bague (4) dans la direction opposée à ladite extrémité de l'élément de broche (2) qui est proche de l'élément de boîte (3), et dans lequel la première bague (4) est axialement en butée contre ledit élément de boîte (3), **caractérisé en ce que** la première bague (4) est reliée à l'élément de broche (2) par l'intermédiaire d'une liaison vissée.

2. Raccord de tuyau (1) selon la revendication 1, **caractérisé en ce que** l'élément de boîte (3) comprend des premiers taraudages (7) à l'intérieur de celui-ci, qui sont en contact avec des taraudages extérieurs (9) de la seconde bague (5), la seconde bague (5) est positionnée entre l'élément de broche (2) et l'élément de boîte (3), et dans lequel la première bague (4) comprend des taraudages intérieurs (15) qui sont en contact d'accouplement avec des seconds taraudages (14) sur l'extérieur de l'élément de broche (2).

3. Raccord de tuyau (1) selon la revendication 2, **caractérisé en ce que** l'élément de broche (2) comprend une surface de localisation (18) alignée dans la direction transversale par rapport à l'axe longitudinal (19) de l'élément de broche (2), dans lequel la surface de localisation (18) est en contact avec l'élément de boîte (3) et dans lequel la surface de localisation (18) est de préférence alignée de manière orthogonale par rapport audit axe longitudinal (19).

4. Raccord de tuyau (1) selon les revendications 2 ou 3, **caractérisé en ce que** l'élément de boîte (3) est relié directement et/ou de manière intégrée au second tuyau.

5. Raccord de tuyau (1) selon l'une des revendications 2 à 4, **caractérisé en ce que** les premiers taraudages (7) sont de hauteur de taraudage et/ou pas de taraudage et/ou forme, différents, des seconds taraudages (14).

6. Raccord de tuyau (1) selon l'une des revendications 2 à 5, **caractérisé en ce que** les premiers taraudages (7) et les seconds taraudages (14) sont du même type de vis.

7. Raccord de tuyau (1) selon l'une des revendications 2 à 6, **caractérisé en ce que** les premiers taraudages (7) sont du type en dent de scie.

8. Raccord de tuyau (1) selon l'une des revendications précédentes, **caractérisé en ce que** la surface des parties vissées est recouverte par au moins une couche protectrice et/ou de lubrifiant.

9. Procédé de couplage fluide serré d'un premier tuyau à un second tuyau, comprenant les étapes consistant à : insérer une première bague (4) dans un élément de boîte (3), qui est reliée au second tuyau, insérer une seconde bague (5) dans l'élément de boîte (3) et insérer un élément de broche dans la première bague (4), dans lequel la seconde bague (5) s'étend globalement depuis la première bague (4) dans la direction opposée à une extrémité de l'élément de broche (2) qui est proche de l'élément de boîte (3), dans lequel ladite première bague (4) est axialement en butée contre ledit élément de boîte (3), **caractérisé en ce que** la première bague (4) est reliée à l'élément de broche (2) par l'intermédiaire d'une liaison vissée.

10. Procédé de couplage fluide serré d'un premier tuyau à un second tuyau, comprenant les étapes consistant à : imposer une seconde bague (5) au-dessus d'un élément de broche (2), positionner une première bague (4) sur l'extérieur de l'élément de broche (2), insérer la combinaison de l'élément de broche (2), la première bague (4) et la seconde bague (5) au moins partiellement dans un élément de boîte (3), insérer la seconde bague (5) avec ses taraudages extérieurs (9) dans l'élément de boîte (3), dans lequel la seconde bague (5) s'étend globalement depuis la première bague (4) dans la direction opposée à une extrémité de l'élément de broche (2) qui est proche de l'élément de boîte (3), et dans lequel ladite première bague (4) est axialement en butée contre ledit élément de boîte (3).
